# EUROPÄISCHE PATENTSCHRIFT

(11) **EP 0 384 389 B1**
(45) Veröffentlichungstag und Bekanntmachung des Hinweises auf die Patenterteilung: **07.07.1993**
(21) Anmeldenummer: 90103232.6
(22) Anmeldetag: 20.02.1990
(51) Int. Cl.: B60P 1/64

(54) **Absetzkipper**
Lorry with a removable tipping bucket
Camion à benne basculante amovible

(30) Priorität: 24.02.1989 DE 3905692
(43) Veröffentlichungstag der Anmeldung: 29.08.1990
(73) Patentinhaber: Gergen, Engelbert, D-66583 Spiesen-Elversberg (DE); Gergen, Hans Georg, D-66386 St Ingbert (DE); Gergen, Ottmar, D-66386 St Ingbert (DE)
(72) Erfinder: Feld, Rudolf, D-6683 Spiesen-Elversberg (DE)
(74) Vertreter: Vièl, Georg, Dipl.-Ing.

(56) Entgegenhaltungen:
- FR-A- 1 257 148
- FR-A- 2 078 842
- FR-A- 2 245 502

## Beschreibung

Die Erfindung betrifft einen Absetzkipper zum Aufnehmen und Absetzen von Behältern, Silos, Paletten oder dergleichen, wobei zwei mit Hilfe von Hydraulik-Zylindern schwenkbare Tragarme vorgesehen und die Hydraulikzylinder in vertikaler Richtung als Mehrfach-Hydraulikzylinder ausgebildet sind.

Die bekannten Absetzkipper haben in aller Regel zum Verschwenken der Tragarme ein Hydraulikzylinderpaar, das einerseits am vorderen Ende des Fahrzeugrahmens und andererseits am unteren Ende der Tragarme beweglich gelagert ist. Bei Absetzkippern dieser Art können Behälter, Silos oder dergleichen aufgenommen werden, deren maximale Breite kleiner als der Abstand zwischen den beiden Tragarmen ist. Aufgrund der gemäß STVZO (Straßenverkehrszulassungsordnung) vorgeschriebenen Gesamt-Breite für straßenzulässge Fahrzeuge von 2 500 mm, ergibt sich bei derzeitigen Konstruktionsprinzipien eine maximale Breite für die Behälter von Absetzkippern von 1 750 mm (DIN 30 720). Diese Breite ist für viele Zwecke nicht ausreichend und damit der Absetzkipper nur bedingt einsatzfähig.

Aus dem Dokument FR-A-1 257 148 ist ein Absetzkipper bekannt, bei dem die den Tragarmen zugeordneten Hydraulikzylinder in vertikaler Richtung als Mehrfach-Hydraulikzylinder ausgebildet sind. Allerdings wirken die beiden Zylinder nicht gleichzeitig, sondern nacheinander: Während der erste Zylinder den Tragarm von seiner Normalposition in seine tiefste Position bringen soll, soll der zweite Zylinder den Tragarm in seiner Normalposition halten.

Der Erfindung liegt die Aufgabe zugrunde, einen Absetzkipper zu schaffen, bei dem die maximale Breite für die Behälter der gesetzlich zulässigen Fahrzeugbreite möglichst nahe kommt.

Diese Aufgabe wird erfindungsgemäß dadurch gelöst, daß die den zwei Tragarmen zugeordneten Mehrfach-Hydraulikzylinder parallel zueinander und gleichzeitig in die gleiche Richtung wirkend angeordnet sind.

Weitere Ausbildungen der Erfindung bestehen darin, daß als Mehrfach-Hydraulikzylinder zwei, drei oder mehr als drei Hydraulikzylinder vorgesehen sind.

Die mit der Erfindung erzielten Vorteile bestehen insbesondere darin, daß die Breite von Absetzkippern bestmöglich genutzt wird, um die Nutzlast bzw. die maximale Ladebreite des Fahrzeugs voll auszunutzen. So können bei einem Absetzkipper nach der Erfindung beispielsweise Behälter, Paletten oder dergleichen aufgenommen werden, deren Breite z.B. 2 250 mm beträgt. Auch ist es mit dem neuen Absetzkipper möglich, sogenannte Europaletten in zwei Reihen nebeneinander aufzunehmen, was gegenüber der derzeitigen Arbeitsweise eine Verdoppelung der Ladekapazität bedeutet.

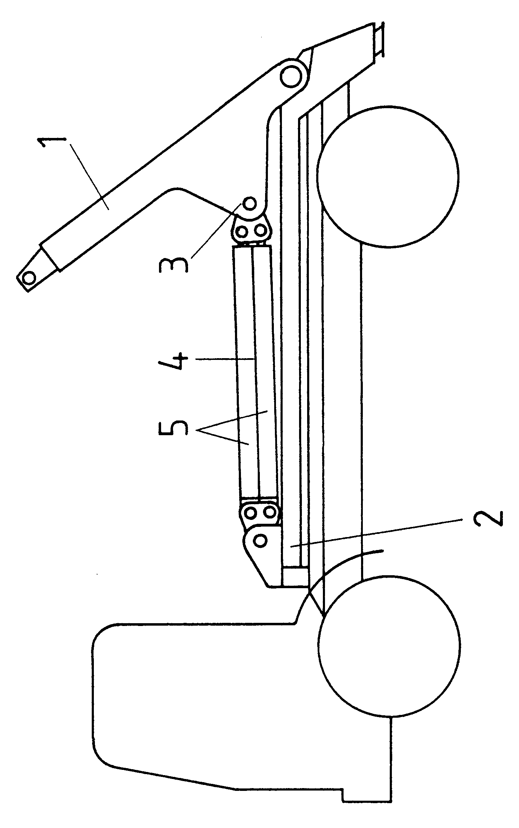

Ein Ausführungsbeispiel der Erfindung ist in der Zeichnung dargestellt und wird im folgenden näher beschrieben.

Die Zeichnung zeigt schematisch von der Seite gesehen einen Absetzkipper, wie er beispielsweise in der DIN 30 723 angegeben ist. Die schwenkbaren Tragarme 1 werden in Längsrichtung des Fahrzeugs mit Hilfe von Hydraulikzylindern bewegt, die am vorderen Teil des Fahrzeugrahmens 2 und am unteren Ende 3 der Tragarme 1 beweglich gelagert sind. Wenn die maximale Fahrzeugbreite durch gesetzliche Vorschriften festgelegt ist, so müssen Maßnahmen gefunden werden, um trotz vorhandener Schwenkarme mit endlicher Breite eine größtmögliche Breite von aufzunehmenden Behältern oder sonstigen Gütern realisieren zu können. Die Lösung gemäß der Erfindung sieht vor, daß die notwendigen Hydraulikzylinder in vertikaler Richtung als Mehrfach-Hydraulikzylinder 4 ausgebildet sind. Als Mehrfach-Hydraulikzylinder 4 können zwei Hydraulikzylinder 5 oder drei solcher Hydraulikzylinder oder auch mehr als drei dieser Hydraulikzylinder 5 verwendet werden.

In dem Ausführungsbeispiel gemäß der Zeichnung sind zwei Hydraulikzylinder 5 vorgesehen, die parallel wirken. Dadurch ist es möglich, jeden einzelnen Hydraulikzylinder 5 im Durchmesser verhältnismäßig klein zu wählen, so daß auch die Tragarme 1 verhältnismäßig schmal werden können. Das hat zur Folge, daß bei einem erfindungsgemäßen Absetzkipper zwischen den Tragarmen bzw. den Mehrfach-Hydraulikzylindern eine größtmögliche lichte Weite zur Verfügung steht, weshalb Behälter mit größtmöglicher Breite aufgenommen werden können.

## Patentansprüche

1. Absetzkipper zum Aufnehmen und Absetzen von Behältern, Silos, Paletten oder dergleichen, wobei zwei mit Hilfe von Hydraulikzylindern schwenkbare Tragarme (1) vorgesehen und die Hydraulikzylinder in vertikaler Richtung als Mehrfach-Hydraulikzylinder ausgebildet sind, dadurch **gekennzeichnet**, daß die den zwei Tragarmen zugeordneten Mehrfach-Hydraulikzylinder (4) parallel zueinander und gleichzeitig in die gleiche Richtung wirkend angeordnet sind.

2. Absetzkipper nach Anspruch 1, dadurch **gekennzeichnet**, daß als Mehrfach-Hydraulikzylinder (4) zwei Hydraulikzylinder (5) vorgesehen sind.

3. Absetzkipper nach Anspruch 1, dadurch **gekennzeichnet**, daß als Mehrfach-Hydraulikzylinder (4) drei Hydraulikzylinder (5) vorgesehen sind.

4. Absetzkipper nach Anspruch 1, dadurch **gekennzeichnet**, daß als Mehrfach-Hydraulikzylinder (4) mehr als drei Hydraulikzylinder vorgesehen sind.

## Claims

1. Tipping container vehicle for receiving and depositing containers, silos, pallets or the like, two supporting arms (1) being provided which are pivotable by means of hydraulic cylinders and the hydraulic cylinders being configured in the vertical direction as multiple hydraulic cylinders, characterised in that the multiple hydraulic cylinders (4) assigned to the two supporting arms are disposed parallel to each other and so as to act simultaneously in the same direction.

2. Tipping container vehicle according to Claim 1, characterised in that two hydraulic cylinders (5) are provided as multiple hydraulic cylinders (4).

3. Tipping container vehicle according to Claim 1, characterised in that three hydraulic cylinders (5) are provided as multiple hydraulic cylinders (4).

4. Tipping container vehicle according to Claim 1, characterised in that more than three hydraulic cylinders are provided as multiple hydraulic cylinders (4).

## Revendications

1. Multibenne servant à saisir et déposer des cuves, des silos, des palettes vu analogues, dans lequel sont prévus deux bras de support (1) pouvant pivoter à l'aide de vérins. hydrauliques, qui sont agencés, dans la direction verticale, sous la forme de vérins hydrauliques multiples, caractérisée par le fait que les vérins hydrauliques multiples (4), qui sont associés aux deux bras de support, sont parallèles entre eux et sont agencés de manière à agir simultanément dans la même direction.

2. Multibenne suivant la revendication 1, caractérisée par le fait qu'il est prévu, comme vérins hydrauliques multiples (4), deux vérins hydrauliques (5).

3. Multibenne suivant la revendication 1, caractérisée par le fait qu'il est prévu comme vérins hydrauliques multiples (4), trois vérins hydrauliques (5).

4. Multibenne suivant la revendication 1, caractérisée par le fait qu'il est prévu comme vérins hydrauliques multiples (4), plus de trois vérins hydrauliques.
